# EUROPEAN PATENT APPLICATION

(11) **EP 4 471 614 A1**
(43) Date of publication of application: **04.12.2024**
(21) Application number: 24179279.5
(22) Date of filing: 31.05.2024
(51) Int. Cl.: G06F 16/242, G06F 16/2452

(54) **LARGE DATA SET MANAGEMENT WITH LARGE LANGUAGE MODELS**

(30) Priority: 31.05.2023 US 202363505233 P; 16.08.2023 US 202363520027 P; 24.05.2024 US 202418674628
(71) Applicant: Palantir Technologies Inc., Denver, CO 80202 (US)
(72) Inventor: HAWES, Matthew, Denver, 80202 (US); SHANKAR, Ankit, Denver, 80202 (US); TELLING, Morten, Denver, 80202 (US); DOBSON, Jack, Denver, 80202 (US); MAJID, Adil, Denver, 80202 (US)
(74) Representative: Jolliffe, Jack Louis

(57) **Abstract**

A system may receive a natural language query. A system may receive indications of one or more data object types, wherein each of the one or more data object types is associated with a respective one or more properties. A system may receive references to one or more data sets, wherein the one or more data sets are each associated with at least a respective data object type. A system may transmit a prompt to a large language model ("LLM"), the prompt comprising at least: the natural language query, the indications of the one or more data object types, and the references to the one or more data sets. A system may receive, from the LLM, a response to the prompt, wherein the response includes indications of: at least a first reference to a first data set and a query to be applied to the first data set.

## Description

### CROSS-REFERENCE TO RELATED APPLICATIONS

This application claims the benefit of U.S. Provisional Application No. 63/505233, filed May 31, 2023, titled "SUPPORTING AN LLM WITH OTHER FUNCTION TYPES," and U.S. Provisional Application No. 63/ 520027, filed August 16, 2023, titled "LARGE DATA SET MANAGEMENT WITH LARGE LANGUAGE MODELS."

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for data integration, analysis, and visualization. More specifically, implementations of the present disclosure relate to computerized systems and techniques for managing large data sets using a large language model.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations on one or more data sets. Various techniques have been developed to minimize the effort required by a human user in adapting and reprogramming the computer for managing large data sets.

### SUMMARY

The systems, methods, and devices described herein each have several aspects, no single one of which is solely responsible for its desirable attributes. Without limiting the scope of this disclosure, several non-limiting features will now be described briefly.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

The present disclosure includes systems, methods, and software (generally referred to herein as "the system") for providing improved (including more accurate and more efficient) interactions with LLMs. The present disclosure further includes various processes, functionality, and interactive graphical user interfaces related to the system. According to various implementations, the system (and related processes, functionality, and/or interactive graphical user interfaces) can leverage an LLM to perform a natural language query with reference to large data sets without inputting the totality of the large data sets into the prompt.

As described above, LLMs are limited in their capacity to receive or process large data sets. To resolve this problem and leverage an LLM to perform computational tasks associated with large data sets, the system can add one or more references to data set(s), additional information about the referenced data set (including, for example, information regarding data object types of the referenced data set), one or more tools to help an LLM understand and answer the users request, and/or a natural language query including the user's request to the prompt of an LLM.. Thus, and as further explained herein, the system can advantageously overcome and/or work around the limitations mentioned above by adding references to data set(s), combined with information regarding data object types and natural language queries to the prompt of an LLM. Such features of the system can reduce the complexity and quantity of tokens passed to an LLM, thus reducing the risk of partial comprehension, and/or misinterpretation of context.

According to various implementations, instead of passing an entire data set to an LLM for processing, the system may assign and pass a unique identifier associated with to one or more data set(s) to the LLM. The unique identifier can include a natural language set of characters, a word, a phrase or the like, referencing one or more data sets, and/or any portion of data associated with one or more data sets (e.g., data objects, data object types, properties of data object types, and/or the like). Further, the system may pass additional natural language instructions associated with a unique identifier to an LLM. The additional natural language instructions can include characteristics of a referenced data set, to provide an LLM with context for a unique identifier. For example, the system can pass one or more examples of data object types, properties associated with data object types, data objects, property types, and/or descriptions of any data associated with a data set.

The system can determine and/or provide a user with the option to select and pass one or more data object types and/or tools to an LLM. Tools can add additional context to the prompt of an LLM regarding a user's request and/or a system-generated task. Tools can also be used by the system to fine tune the scope of requests, instructing an LLM to generate a narrow response to the user's query. Tools may further add natural language instructions to the prompt of an LLM to respond to a user's query in accordance with a specified structure. For example, the system may instruct an LLM to output a response in a specific structure such that an external application may execute a further task (and/or routine) using the LLM's response.

The system can pass system-generated and/or user-generated natural language queries in response to a user selected and/or system specified tool. Natural language queries can be instructions including, for example, a request to execute tasks associated with one or more selected tools, such as requesting a list of data objects including a specific data object type.

The system can assign a unique identifier to data set(s), and/or assign a unique identifier to any portion of data associated with one or more data sets (e.g., data objects, data object types, properties, property types, and/or the like). A data set can be configured, assigned a unique identifier, referenced, and/or hosted by the system. Alternatively or in addition, the system can access, configure, assign a unique identifier to, and/or reference one or more data sets hosted externally, on a third-party server. The system may construct data set(s) and/or request that data sets hosted externally are configured based on an ontology as determined by the system. An ontology can be stored information that provides a data model for storage of data in one or more data sets. The system can configure an ontology such that each data set includes similar structure. For example, an ontology model can be applied by the system to one or more data sets to provide consistent location, formatting, and/or the like, for data objects, data object types, properties, property types, and/or the like. Applying a consistent structure to data sets eliminates ambiguity, enabling multiple functions (e.g., an LLM, models, applications, operations, and/or the like) of the system to reference data with a single unique identifier.

The system can add a unique identifier to the prompt of an LLM. A unique identifier can include a natural language word and/or a phrase that references data set(s), data objects, data object types, properties, property types, and/or the like. Advantageously, passing a natural language word and/or a phrase to the prompt of an LLM, which is optimized to operate with natural language, can enable the LLM to effectively process data and determine an appropriate response for a given query.

Along with a unique identifier, the system can be configured to add additional natural language instructions to the prompt of an LLM. The additional natural language instructions can be associated with a unique identifier. For example, natural language instructions can include characteristics of one or more referenced data sets, such as data objects, data object types, properties of data object types, property types, and/or the like. As an illustrative example, the system can assign a unique identifier "actor" to reference a data set having data objects associated with movies. The system can add the unique identifier "actor" and additional instructions (e.g., a sample of data objects from the data set associated with movies, such as a list of movie titles, a description of the movies, and actors associated with the movies) to the prompt of an LLM. Advantageously, adding natural language text (e.g., a unique identifier and/or additional instructions) to the prompt of an LLM can enable the LLM to effectively process and respond to a user's query regarding a data set having data objects associated with movies, without adding the entire data set to the prompt of the LLM.

The system can be configured to add natural language information associated with one or more data object types and/or natural language information in response to a user selection of one or more tools (hereinafter "tools") to the prompt of an LLM. Tools may be selected by a user and/or determined by the system in response to a user input (e.g., based on a response from, for example, an LLM). Advantageously, in response to a user and/or system selection of one or more tools, the system can add additional information and/or instructions to the prompt of an LLM, to help the LLM gain more information about a specific user defined task and/or a system-generated task, to fine tune the scope of instructions passed to the LLM, and/or to instruct the LLM to generate a response using a specific structure such that an external application may receive and execute a task (e.g., a filter or query) in accordance with the LLM's response.

In various implementations, the system can add natural language instructions to the prompt of an LLM in response to a user selection of a data object type selector tool. A data object type selector tool can include natural language text, instructing an LLM to generate a filter and/or provide information in response to a user's selection of one or more data object types and a user defined task and/or tasks associated with the selection of one or more data object types. The system can allow a user to select one or more data object types from a list of data object types, via a graphical user interface ("GUI"). Additionally, the system may allow a user to search for one or more data object types via a query. Each data object type displayed in the list of data object types can be associated with one or more unique identifiers as described above. The unique identifiers can be, for example, a reference to data (e.g., data objects, data object types, properties of data object types, property types, and/or the like) associated with the object type. In response to a user input selecting one or more data object types, the system can add a set of natural language instructions to the prompt of an LLM, that the user may ask one or more questions regarding the selected data object types.

In an additional example, the system can add natural language instructions to an LLM prompt in response to a user selection of an apply actions tool. An apply actions tool can add a set of natural language instructions to the prompt of an LLM, instructing the LLM to apply one or more actions in response to a user's selection of one or more actions and a user defined task and/or tasks associated with the selection of one or more actions. The system can allow a user to select one or more actions from a list of actions, via a GUI. Additionally, the system may allow a user to search for one or more actions via a query. Each action displayed in the list of actions can be associated with one or more data set(s), data objects, data object types, properties, property types, and/or the like. In response to a user input selecting one or more actions from the list of actions, the system can add a set of natural language instructions to the prompt of an LLM, that the user may ask one or more questions and/or request that the LLM apply the selected actions.

In an additional example, the system can add natural language instructions to an LLM prompt in response to a user selection of an ontology functions tool. An ontology functions tool can add a set of natural language instructions to the prompt of an LLM, instructing the LLM to execute one or more ontology functions in response to a user's selection of one or more ontology functions and a user defined task and/or tasks associated with the selection of one or more ontology functions. The system can allow a user to select one or more ontology functions from a list of actions provided to the user via a GUI. Additionally, the system can allow a user to search for one or more ontology functions via a query. Each ontology function displayed in the list of ontology functions can be associated with a function applied to the ontology of one or more data set(s), data objects, data object types, properties, property types, and/or the like. In response to a user input selecting one or more ontology functions from the list of ontology functions, the system can add a set of natural language instructions to the prompt of an LLM, that the user may ask one or more questions and/or request that the LLM execute the selected ontology functions.

Additionally, the system can add natural language instructions to the prompt of an LLM, to generate a response in accordance with the pre-defined structure. As an illustrative example, the data object type selector tool can instruct an LLM to respond with the following structure: a data object type identification, a data object type's common name, a category, and/or a description. Descriptions can further include a unique identifier that an external application may recognize as a stand-in for data sets(s) and/or a set of instructions describing information an LLM requires.

The system can further include functionality to enable a user to provide a natural language query. The system may enable a user to enter instructions in the natural language query to request one or more tasks associated with a selected tool. For example, the user may request that an LLM provide information associated with one or more selected data object types. In various implementations, an LLM may respond with information associated with one or more selected data object types, such as a data object type's identification, data object type common name, a category, and/or a data object type description as described above.

Additionally, the user may request, via the natural language query, that an LLM query information from one or more large data sets associated with one or more selected data object types. Although an LLM may not have the technical capabilities to query a large data set, the system can add sufficient context (e.g., one or more unique identifiers, additional information, tools, and/or the like) to the prompt of an LLM such that the LLM generated response includes a sample of data and/or instructions for an external application to reference. The instructions for an external application can include a unique identifier referencing a data set and a natural language description of a filter to apply to the referenced data set to answer the user's query.

Further, the system may add additional natural language instructions to the prompt of an LLM, that if the LLM generated response indicates that further information is necessary to answer the user's query, the LLM's response can include a request for additional information and/or additional instructions from the user. An example response from an LLM can include a request for one or more samples of data from one or more data sets (e.g., one or more data objects, data object types, properties, property types, or the like), a request for one or more additional unique identifiers, and/or a request including suggestions for narrowing search results requested by the user. The user and/or one or more external applications may respond with additional information and/or additional instructions in the prompt of an LLM.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods of receiving user inputs (including user inputs adding, changing, and/or applying permissions, entering descriptions of tasks, entering prompts, indicating a reduced level of access credential or permissions for a query, selecting data inputs, altering a set of data inputs for a query, redacting or removing portions of the output of a nondeterministic model, etc.), translation and delivery of those inputs to various system components, automatic and dynamic execution of complex processes in response to the input delivery, automatic interaction among various components and processes of the system, and automatic and dynamic updating of the user interfaces (to, for example, display the model-related and/or query-related data). The interactions and presentation of data via the interactive user interfaces described herein may accordingly provide cognitive and ergonomic efficiencies, among various additional technical advantages over previous systems.

Thus, various implementations of the present disclosure can provide improvements to various technologies and technological fields, and practical applications of various technological features and advancements. For example, as described above, existing computer-based model evaluation technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that include one or more computer-readable storage mediums having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums are disclosed, wherein the computer-readable storage mediums have program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 illustrates an example computing environment including a data set management system.
FIG. 2 illustrates an object-centric conceptual data model according to various implementations.
FIG. 3A is a flow chart depicting an example routine for referencing and managing a data set with a large language model as part of a data set management system.
FIG. 3B is a flow chart depicting an example routine for receiving indication(s) of data object type(s) and/or properties associated with data object type(s) as part of a data set management system.
FIG. 3C is a flow chart depicting an example routine for receiving reference(s) to data set(s) as part of a data set management system.
FIG. 3D is flow chart depicting an example routine for receiving one or more tool(s) as part of a data set management system.
FIG. 4A is an example user interface permitting the user to select various criteria when managing one or more data sets as part of a data set management system.
FIG. 4B is an example user interface for selecting one or more tools as part of a data set management system.
FIG. 4C is an example user interface illustrating a debugger window associated with the data set management system.
FIG. 4D is an example user interface illustrating an execution log for a requested query as part of a data set management system.
Figure 5 provides additional examples of aspects of implementations of such components of the computing environment.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### I. Overview

As noted above, an LLM is a type of language model that has been trained on a larger data set and has a larger number of training parameters compared to a regular language model. For example, an LLM can understand several natural language instructions at once (e.g., via a prompt), and generate text that is coherent and contextually relevant due to its extensive training. In some contexts, data sets and a natural language query can be input into the prompt of an LLM . However, not all data may fit within the prompt of an LLM. For example, LLMs have a maximum token limit (e.g., word limit) for both prompts and responses due to technical challenges associated with LLMs. Larger prompts, containing more complex structures and information, can overwhelm an LLM's memory capacity and attention mechanisms. As a result, an LLM may struggle to maintain a comprehensive understanding of the entire prompt, leading to partial comprehension or misinterpretation of the context. Thus, extremely large data sets-far exceeding the maximum token limit-cannot be accepted or processed by LLMs. These limitations can prevent users from leveraging the computational power of an LLM to comprehend very large data sets. Due to these limitations, users need to carefully manage their input text, ensuring it fits within the model's token limit while providing sufficient context for meaningful interactions.

The present disclosure includes systems, methods, and software (generally referred to herein as "the system") for providing improved (including more accurate and more efficient) interactions with LLMs. The present disclosure further includes various processes, functionality, and interactive graphical user interfaces related to the system. According to various implementations, the system (and related processes, functionality, and/or interactive graphical user interfaces) can leverage an LLM to perform a natural language query with reference to large data sets without inputting the totality of the large data sets into the prompt.

Also as noted above, LLMs are limited in their capacity to receive or process large data sets. To resolve this problem and leverage an LLM to perform computational tasks associated with large data sets, the system can add one or more references to data set(s), additional information about the referenced data set (including, for example, information regarding data object types of the referenced data set), one or more tools to help an LLM understand and answer the users request, and/or a natural language query including the user's request to the prompt of an LLM.. Thus, and as further explained herein, the system can advantageously overcome and/or work around the limitations mentioned above by adding references to data set(s), combined with information regarding data object types and natural language queries to the prompt of an LLM. Such features of the system can reduce the complexity and quantity of tokens passed to an LLM, thus reducing the risk of partial comprehension, and/or misinterpretation of context.

According to various implementations, instead of passing an entire data set to an LLM for processing, the system may assign and pass a unique identifier associated with to one or more data set(s) to the LLM. The unique identifier can include a natural language set of characters, a word, a phrase or the like, referencing one or more data sets, and/or any portion of data associated with one or more data sets (e.g., data objects, data object types, properties of data object types, and/or the like). Further, the system may pass additional natural language instructions associated with a unique identifier to an LLM. The additional natural language instructions can include characteristics of a referenced data set, to provide an LLM with context for a unique identifier. For example, the system can pass one or more examples of data object types, properties associated with data object types, data objects, property types, and/or descriptions of any data associated with a data set. By combining natural language inputs with information regarding the structure of a data set in an LLM prompt, structured queries to database systems can be generated with high accuracy and low computational cost.

The system can determine and/or provide a user with the option to select and pass one or more data object types and/or tools to an LLM. Tools can add additional context to the prompt of an LLM regarding a user's request and/or a system-generated task. Tools can also be used by the system to fine tune the scope of requests, instructing an LLM to generate a narrow response to the user's query. Tools may further add natural language instructions to the prompt of an LLM to respond to a user's query in accordance with a specified structure. For example, the system may instruct an LLM to output a response in a specific structure such that an external application may execute a further task (and/or routine) using the LLM's response.

The system can pass system-generated and/or user-generated natural language queries in response to a user selected and/or system specified tool. Natural language queries can be instructions including, for example, a request to execute tasks associated with one or more selected tools, such as requesting a list of data objects including a specific data object type.

### Example Aspects Related to Referencing Data Set(s) Via a Prompt

As mentioned above, the system can assign a unique identifier to data set(s), and/or assign a unique identifier to any portion of data associated with one or more data sets (e.g., data objects, data object types, properties, property types, and/or the like). A data set can be configured, assigned a unique identifier, referenced, and/or hosted by the system. Alternatively or in addition, the system can access, configure, assign a unique identifier to, and/or reference one or more data sets hosted externally, on a third-party server. The system may construct data set(s) and/or request that data sets hosted externally are configured based on an ontology as determined by the system. An ontology can be stored information that provides a data model for storage of data in one or more data sets. The system can configure an ontology such that each data set includes similar structure. For example, an ontology model can be applied by the system to one or more data sets to provide consistent location, formatting, and/or the like, for data objects, data object types, properties, property types, and/or the like. Applying a consistent structure to data sets eliminates ambiguity, enabling multiple functions (e.g., an LLM, models, applications, operations, and/or the like) of the system to reference data with a single unique identifier.

The system can add a unique identifier to the prompt of an LLM. A unique identifier can include a natural language word and/or a phrase that references data set(s), data objects, data object types, properties, property types, and/or the like. Advantageously, passing a natural language word and/or a phrase to the prompt of an LLM, which is optimized to operate with natural language, can enable the LLM to effectively process data and determine an appropriate response for a given query.

Along with a unique identifier, the system can be configured to add additional natural language instructions to the prompt of an LLM. The additional natural language instructions can be associated with a unique identifier. For example, natural language instructions can include characteristics of one or more referenced data sets, such as data objects, data object types, properties of data object types, property types, and/or the like. As an illustrative example, the system can assign a unique identifier "actor" to reference a data set having data objects associated with movies. The system can add the unique identifier "actor" and additional instructions (e.g., a sample of data objects from the data set associated with movies, such as a list of movie titles, a description of the movies, and actors associated with the movies) to the prompt of an LLM. Advantageously, adding natural language text (e.g., a unique identifier and/or additional instructions) to the prompt of an LLM can enable the LLM to effectively process and respond to a user's query regarding a data set having data objects associated with movies, without adding the entire data set to the prompt of the LLM.

### Example Aspects Related to Tool Configuration

As mentioned above, the system can be configured to add natural language information associated with one or more data object types and/or natural language information in response to a user selection of one or more tools (hereinafter "tools") to the prompt of an LLM. Tools may be selected by a user and/or determined by the system in response to a user input (e.g., based on a response from, for example, an LLM). Advantageously, in response to a user and/or system selection of one or more tools, the system can add additional information and/or instructions to the prompt of an LLM, to help the LLM gain more information about a specific user defined task and/or a system-generated task, to fine tune the scope of instructions passed to the LLM, and/or to instruct the LLM to generate a response using a specific structure such that an external application may receive and execute a task (e.g., a filter or query) in accordance with the LLM's response.

In various implementations, the system can add natural language instructions to the prompt of an LLM in response to a user selection of a data object type selector tool. A data object type selector tool can include natural language text, instructing an LLM to generate a filter and/or provide information in response to a user's selection of one or more data object types and a user defined task and/or tasks associated with the selection of one or more data object types. The system can allow a user to select one or more data object types from a list of data object types, via a GUI. Additionally, the system may allow a user to search for one or more data object types via a query. Each data object type displayed in the list of data object types can be associated with one or more unique identifiers as described above. The unique identifiers can be, for example, a reference to data (e.g., data objects, data object types, properties of data object types, property types, and/or the like) associated with the object type. In response to a user input selecting one or more data object types, the system can add a set of natural language instructions to the prompt of an LLM, that the user may ask one or more questions regarding the selected data object types.

In an additional example, the system can add natural language instructions to an LLM prompt in response to a user selection of an apply actions tool. An apply actions tool can add a set of natural language instructions to the prompt of an LLM, instructing the LLM to apply one or more actions in response to a user's selection of one or more actions and a user defined task and/or tasks associated with the selection of one or more actions. The system can allow a user to select one or more actions from a list of actions, via a GUI. Additionally, the system may allow a user to search for one or more actions via a query. Each action displayed in the list of actions can be associated with one or more data set(s), data objects, data object types, properties, property types, and/or the like. In response to a user input selecting one or more actions from the list of actions, the system can add a set of natural language instructions to the prompt of an LLM, that the user may ask one or more questions and/or request that the LLM apply the selected actions.

In an additional example, the system can add natural language instructions to an LLM prompt in response to a user selection of an ontology functions tool. An ontology functions tool can add a set of natural language instructions to the prompt of an LLM, instructing the LLM to execute one or more ontology functions in response to a user's selection of one or more ontology functions and a user defined task and/or tasks associated with the selection of one or more ontology functions. The system can allow a user to select one or more functions from a list of functions provided to the user via a GUI. Additionally, the system can allow a user to search for one or more ontology functions via a query. Each ontology function displayed in the list of ontology functions can be associated with a function applied to the ontology of one or more data set(s), data objects, data object types, properties, property types, and/or the like. In response to a user input selecting one or more ontology functions from the list of ontology functions, the system can add a set of natural language instructions to the prompt of an LLM, that the user may ask one or more questions and/or request that the LLM execute the selected ontology functions.

Additionally, the system can add natural language instructions to the prompt of an LLM, to generate a response in accordance with the pre-defined structure. As an illustrative example, the data object type selector tool can instruct an LLM to respond with the following structure: a data object type identification, a data object type's common name, a category, and/or a description. Descriptions can further include a unique identifier that an external application may recognize as a stand-in for data set(s) and/or a set of instructions describing information an LLM requires. Advantageously, an LLM's response, formatted according to the structure herein, can be parsed and passed to one or more external applications and executed.

### Example Aspects Related to User Inputs

The system can further include functionality to enable a user to provide a natural language query. The system may enable a user to enter instructions in the natural language query to request one or more tasks associated with a selected tool. For example, the user may request that an LLM provide information associated with one or more selected data object types. In various implementations, an LLM may respond with information associated with one or more selected data object types, such as a data object type's identification, data object type common name, a category, and/or a data object type description as described above.

Additionally, the user may request, via the natural language query, that an LLM query information from one or more large data sets associated with one or more selected data object types. Although an LLM may not have the technical capabilities to query a large data set, the system can add sufficient context (e.g., one or more unique identifiers, additional information, tools, and/or the like) to the prompt of an LLM such that the LLM generated response includes a sample of data and/or instructions for an external application to reference. The instructions for an external application can include a unique identifier referencing a data set and a natural language description of a filter to apply to the referenced data set to answer the user's query.

Further, the system may add additional natural language instructions to the prompt of an LLM, that if the LLM generated response indicates that further information is necessary to answer the user's query, the LLM's response can include a request for additional information and/or additional instructions from the user. An example response from an LLM can include a request for one or more samples of data from one or more data sets (e.g., one or more data objects, data object types, properties, property types, or the like), a request for one or more additional unique identifiers, and/or a request including suggestions for narrowing search results requested by the user. In response, the user and/or one or more external applications may add additional information and/or additional instructions to the prompt of an LLM.

### Additional Example Aspects

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., LLMs) intelligence ("AI") models, machine learning ("ML") models, multimodal models (e.g., models or combinations of models that can accept inputs of multiple modalities, such as images and text), and/or the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

An LLM is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, attention-based and/or transformer architecture or functionality. LLMs can be useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

Context can include, for example, any information and/or instructions associated with inputs, prompts, responses, and/or the like that are generated and/or communicated to/from the user, the LLM, the system, and/or external systems. For example, context may include a conversation history of inputs to, prompts to, and responses from an LLM. Context may be information and/or instructions provided to an LLM, to help the LLM gain more information about task, to fine tune the scope of additional instructions passed to the LLM, and/or to instruct the LLM to generate a response using a specific structure such that an external application may receive and execute a task (e.g., a filter or query).

An Ontology can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

Data Object (or "Object," "Data Item," "Item," and/or the like) can be a data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

A Data Object Type (or "Object Type," "Data Item Type," "Item Type," and/or the like) can be a type of a data object (e.g., person, event, document, and/or the like). Data object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

### II. Example Data Set Management System and Related Computing Environment

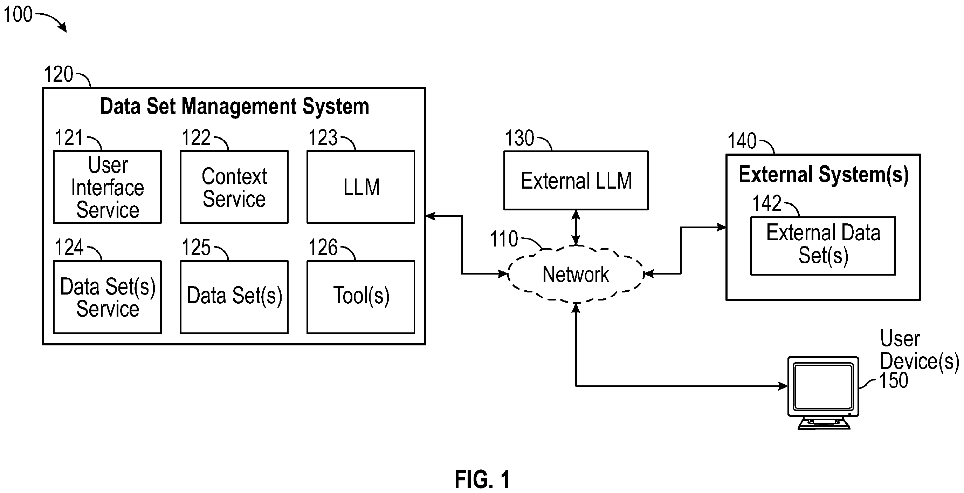

FIG. 1 illustrates an example computing environment 100 including a data set management system 120 (referred to herein as "system 120"). The system 120 may include user interface service 121, context service 122, LLM 123 (which may include one or more LLMs), data set(s) service 124, data set(s) 125, and tool(s) 126. The system 120 may be connected via network 110 to other computing devices, such as user device(s) 150, external system(s) 140, and an external LLM 130 (which may include one or more external LLMs). External system(s) 140 may include external data set(s) 142. For example, user device(s) 150 may transmit a request to the system 120, to access data associated with one or more data set(s) located on external system(s) 140. The system 120 may receive the request from the user device(s) 150 and in response, transmit a request to the external system(s) 140 to provide access to data associated with one or more external data set(s) 142. The external system(s) 140 may receive the request from the system 120 and in response, retrieve data associated with the one or more external data set(s) 142, and/or transmit to the user device(s) 150, and/or the system 120, information based on the results of the accessed external data set(s) 142.

User interface service 121 may allow the system 120 to interact with the user. User interface service 121 may generate a GUI displayed on a client device, such as user device(s) 150. User interface service 121 may also receive data from user device(s) 150, and may store and/or transmit data to the other various components of the system 120. Further, the user interface service 121 may generate a GUI to display data from one or more components of the system 120 and/or external components, such as, for example, a response form LLM 123 and/or external LLM 130, tool(s) 126, internal data set(s) 125, external data set(s) 142, context service 122, and/or data set(s) service 124.

In various implementations, the user interface service 121 can display one or more natural language queries via a GUI. The user interface service 121 may enable a user to enter a natural language query, to request one or more tasks associated with, for example, one or more selected tool(s) 126. The user may request, via the GUI generated by user interface service 121, that LLM 123 and/or external LLM 130 provide information associated with one or more selected data object types. In response to the user requested information, LLM 123 and/or external LLM 130 may transmit a response to the user interface service 121 (and/or another component of the system 120), including information associated with one or more selected data object types (e.g., a data object type's identification, data object type common name, a category, and/or a data object type description as described above). User interface service 121 can then generate, via a GUI, information including the information associated with one or more selected data object types.

Additionally, the user may request, via a natural language query provided by user interface service 121, that LLM 123 and/or external LLM 130 query information from one or more large data sets associated with one or more selected data object types. Although an LLM may not have the technical capabilities to query a large data set, the user requested query received by user interface service 121, along with additional context provided by, for example, the context service 122, and/or data set(s) service 124 as described herein, can add sufficient context (e.g., one or more unique identifiers, additional information, tool(s) 126, and/or the like) to the prompt of LLM 123 and/or external LLM 130 such that the LLM generated response includes a sample of data and/or instructions for an external application to reference. Further, the user interface service 121 can generate via a GUI, and/or transmit the instructions to an external application, including one or more unique identifiers referencing a data set and/or a natural language description of a filter to apply to the referenced data set to answer the user's query.

Additionally, the user interface service 121 may add additional natural language instructions to the prompt of LLM 123 and/or external LLM 130, that if the LLM generated response indicates that further information is necessary to answer the user's query, the LLM's response can include a request for additional information and/or additional instructions from the user. An example response from LLM 123 and/or external LLM 130 can include a request for one or more samples of data from internal data set(s) 125 and/or external data set(s) 142 (e.g., one or more data objects, data object types, properties, property types, or the like), a request for one or more additional unique identifiers, and/or a request including suggestions for narrowing search results. The user and/or one or more external applications may add, via a GUI generated by user interface service 121, additional information and/or additional instructions to the prompt of an LLM.

Context service 122 may send and/or receive data to/from user device(s) 150, external system(s) 140, user interface service 121, data set(s) service 124, and/or tool(s) 126. Additionally, context service 122 can add natural language text to the prompt of, and/or receive a response from LLM 123, and/or external LLM 130. For example, context service 122 may connect to external system(s) 140 through an API and retrieve or submit data to/from a one or more external data set(s) 142 maintained on external system(s) 140 through appropriate API calls. Similarly, context service 122 may receive data from an API from user device(s) 150 through appropriate API calls. Additionally, context service 122 can execute steps and/or functions associated with tool(s) 126, and/or data set(s) service 124 such as assigning a unique identifier to one or more data sets stored on internal data set(s) 125, external data set(s) 142, and/or assign a unique identifier to any portion of data associated with internal and/or external data sets (e.g., data objects, data object types, properties, property types, and/or the like).

Context service 122 can add natural language information to the prompt of an LLM, such as LLM 123 and/or external LLM 130, based on a user selection of one or more tool(s) 126, a defined ontology, and/or in response to a user input via the user interface.

The context service 122 can add natural langue information to the prompt of an LLM in accordance with one or more tools 126. Advantageously, context service 122 can add instructions to the prompt of an LLM based on one or more tool(s) 126 to help the LLM gain more information about a specific user defined task and/or a system-generated task, to fine tune the scope of instructions passed to the LLM, and/or to instruct the LLM to generate a response using a specific structure such that an external application may receive and execute a task (e.g., a filter or query) in accordance with the LLM's response. In one implementation, the context service 122 can add natural language instructions to the prompt of an LLM in response to a user selection of a data object type selector tool (and/or one or more additional tools). The context service 122 can add a set of natural language instructions to the prompt of LLM 123 and/or external LLM 130 for example, that the user may ask one or more questions regarding a selected data object types in response to a user input selecting one or more data object types.

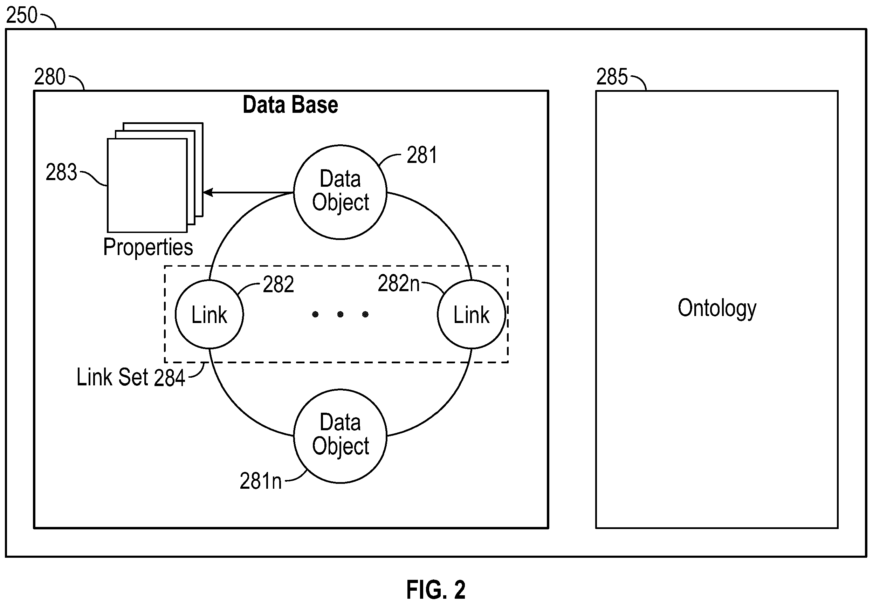

The context service 122 can add natural langue information to the prompt of an LLM in accordance with a defined ontology. An ontology model (as described in detail as part of FIG. 2) can be used by context service 122 in response to a user input, to add natural language information to the prompt of an LLM based on, for example, one or more referenced data set(s), data object type(s), data object(s), properties of data objects and/or the like. In one implementation, context service 122 can generate a list of one or more data objects, data object types or the like based on a defined ontology in response to a user input referencing one or more data set(s). The context service 122 can then add the one or more data objects, data object types or the like, to the prompt of an LLM, to provide the LLM with additional context.

Context service 122 can add natural langue information to the prompt of an LLM in accordance with a user input. For example, context service 122 can receive text and/or a selection of one or more data object type(s) from a user, and in response, add the received text and/or generate text associated with the selected data object type(s) to the prompt of an LLM.

Additionally, the context service 122 can add natural language instructions to the prompt of an LLM, to generate a response in accordance with the pre-defined structure. As an illustrative example, context service 122 can add instructions to the prompt of LLM 123 and/or external LLM 130, to respond to a query with the following structure: a data object type identification, a data object type's common name, a category, and/or a description. The description and/or another portion of the structured response can further include a unique identifier as described herein. Advantageously, context service 122 can provide instructions to an LLM, requesting that the LLM respond according to a defined structure, such that the LLM response can be passed and executed by one or more external applications.

LLM 123 can be any type of language model that has been trained on a larger data set and has a larger number of training parameters compared to a regular language model. LLM 123 can understand more intricate patterns and generate text that is more coherent and contextually relevant due to its extensive training. Thus, LLM 123 may perform well on a wide range of topics and tasks. LLM 123 may include a NN trained using self-supervised learning. LLM 123 may be of any type, including a QA LLM that may be optimized for generating answers from a context, a multimodal LLM/model, and/or the like. LLM 123 (and/or other models of the present disclosure), may include, for example, attention-based and/or transformer architecture or functionality. LLM 123 can be useful for natural language processing, including receiving natural language prompts from for example, user interface service 121, context service 122, data set(s) service 124, data set(s) 125, tool(s) 126, external data set(s) 142, user device(s) 150, or the like, and providing natural language responses based on the text on which the model is trained.

Data set(s) service 124 can generate a unique identifier and/or add a unique identifier to the prompt of internal LLM 123 and/or external LLM 130. A unique identifier can include a natural language word and/or a phrase generated by data set(s) service 124, that references internal data set(s) 125, external data set(s) 142, and/or data associated with one or more data set(s) such as data objects, data object types, properties, property types, and/or the like. In one implementation, a unique identifier can be assigned by the data set(s) service 124 based on selection of one or more tool(s) 126, selection of one or more data object types, and/or based on a user request. Advantageously, data set(s) service 124 can pass a natural language word and/or a phrase to the prompt of LLM 123 and/or external LLM 130 to enable the LLM to effectively process data and determine an appropriate response for a given query.

Further, data set(s) service 124 can access, configure, and/or host internal data set(s) 125. Alternatively or in addition, data set(s) service 124 can access, configure, and/or reference one or more external data set(s) 142 hosted on a third-party server. The data set(s) service 124 may construct data set(s) and/or request that data sets hosted externally are configured based on an ontology. The data set(s) service 124 can further store an ontology used to structure one or more data set(s). Further, the data set(s) service 124 can configure an ontology such that each data set includes similar structure. For example, an ontology model can be applied by the data set(s) service 124 to internal data set(s) 125 and/or external data set(s) 142 to provide consistent location, formatting, and/or the like, for data objects, data object types, properties, property types, and/or the like. Advantageously, applying a consistent structure to data sets eliminates ambiguity, enabling multiple functions (e.g., LLM 123, external LLM 130, models, applications, operations, and/or the like) of the system 120 to reference data with a single unique identifier.

Moreover, data set(s) service 124 can add additional natural language instructions to the prompt of LLM 123 and/or external LLM 130. The additional natural language instructions can be associated with, for example, one or more unique identifier(s). For example, natural language instructions can include characteristics of one or more referenced internal data set(s) 125 and/or external data set(s) 142, such as data objects, data object types, properties of data object types, property types, and/or the like. As an illustrative example, the data set(s) service 124 can assign a unique identifier "actor" to reference a data set stored within internal data set(s) 125, having data objects associated with movies. The data set(s) service 124 can add the unique identifier "actor" and additional instructions (e.g., a sample of data objects from the data set associated with movies, such as a list of movie titles, a description of the movies, and actors associated with the movies) to the prompt of LLM 123 and/or external LLM 130. Advantageously, adding natural language text (e.g., a unique identifier and/or additional instructions) to the prompt of LLM 123 and/or external LLM 130 can enable the LLM to effectively process and respond to a user's query regarding a data set having data objects associated with movies, without adding the entire data set to the prompt of the LLM.

Internal data set(s) 125 can include a datastore and/or other data structure storing one or more data set(s). For example, internal data set(s) 125 can include data gathered from a real-world event, a system or sub-system, and/or a natural phenomenon. In various implementations, internal data set(s) 125 can include data from LLM 123, external LLM 130, user device(s) 150, external system(s) 140, user interface service 121, context service 122, data set(s) service 124, tool(s) 126 and/or system 120. Data included in internal data set(s) 125 can be assigned a unique identifier. Internal data set(s) 125 can be accessed, configured, assigned a unique identifier, referenced, and/or hosted by, for example, data set(s) service 124 and/or another component of the system 120. Data included in internal data set(s) 125 can be constructed based on an ontology as determined by data set(s) service 124, such that one or more data set(s) and/or a portion of one or more data set(s) (e.g., data objects, data object types, properties, property types, and/or the like) includes a similar structure. For example, one or more data sets of internal data set(s) 125 can be structured by an ontology model to provide consistent location, formatting, and/or the like, for data objects, data object types, properties, property types, and/or the like.

Tool(s) 126 can include a datastore and/or other data structure storing one or more instructions including natural language information associated with one or more data object types and/or instructions storing natural language information added to the prompt of an LLM via context service 122, in response to a user selection. Tool(s) 126 may be selected by a user via a GUI as generated by user interface service 121. Additionally and/or alternatively, tool(s) 126 may be selected and/or determined by the system 120 (e.g., determined by context service 122, user interface service 121, and/or data set(s) service 124) based on a response from, for example, LLM 123 and/or external LLM 130. Advantageously, in response to a user and/or system selection of one or more tool(s) 126, the system 120 (e.g., context service 122) can add additional information and/or instructions to the prompt of LLM 123 and/or external LLM 130, to help the LLM gain more information about a specific user defined task and/or a system-generated task, to fine tune the scope of instructions passed to the LLM, and/or to instruct the LLM to generate a response using a specific structure such that an external application may receive and/or execute a task (e.g., a filter or query). In one implementation, tool(s) 126 can include a data object type selector tool, an apply actions tool, and/or an ontology functions tool. However, tool(s) 126 can include one or more tools and/or additional tools as required by the system 120.

In one implementation, tool(s) 126 can include a data object type selector tool. In response to a user selection of the data object type selector tool, context service 122 can add a set of natural language instructions to the prompt of an LLM, instructing the LLM to generate a filter and/or provide information in response to a user's selection of one or more data object types. Further, data object type selector tool can include instructions to display, via a GUI generated by user interface service 121, one or more data object types from a list of data object types for selection by the user. Additionally, the data object type selector tool may include instructions that, when executed by data set(s) service 124, allow a user to search for one or more data object types via a query (e.g., querying internal data set(s) 125 and/or external data set(s) 142 for data object types). Each data object type displayed as part of a list of data object types can be associated with one or more unique identifiers as described above. The unique identifiers can be, for example, a reference to data set(s), data objects, data object types, properties of data object types, property types, and/or the like, associated with a selected data object type. Further, in response to a user selection of the object type selector tool, context service 122 can add a set of natural language instructions to the prompt of an LLM, instructing the LLM that a user may ask one or more questions regarding one or more selected data object types.

In response to a user selection of the apply action tool, context service 122 can add a set of natural language instructions to the prompt of an LLM, instructing the LLM to generate a response for applying one or more actions to a data set in response to a user's selection of one or more actions. Further, the apply actions tool can include instructions to display, via a GUI generated by user interface service 121, one or more actions from a list of actions, for selection by the user. Additionally, the apply actions tool may include instructions that, when executed by data set(s) service 124, allow a user to search for one or more actions via a query (e.g., querying internal data set(s) 125 and/or external data set(s) 142 for data object types). Each action displayed as part of a list of actions can be associated with one or more actions applied to one or more ontology model(s), data set(s), data object(s), data object type(s), properties, property type(s), and/or the like (e.g., actions performed on one or more ontology models, actions associated with data for an ontology model, or the like). Further, in response to a user selection of the apply actions tool, context service 122 can add a set of natural language instructions to the prompt of an LLM, instructing the LLM that a user may ask one or more questions regarding one or more selected actions.

In response to a user selection of the ontology functions tool, context service 122 can add a set of natural language instructions to the prompt of an LLM, instructing the LLM to generate a response for applying one or more ontology functions to a data set in response to a user's selection of one or more ontology functions. Further, the ontology functions tool can include instructions to display, via a GUI generated by user interface service 121, one or more ontology functions from a list of ontology functions, for selection by the user. Additionally, the ontology functions tool may include instructions that, when executed by data set(s) service 124, allow a user to search for one or more ontology functions via a query (e.g., querying internal data set(s) 125 and/or external data set(s) 142 for data object types). Each ontology function displayed as part of a list of ontology functions can be associated with one or more functions regarding one or more ontology model(s), data set(s), data object(s), data object type(s), properties, property type(s), and/or the like (e.g., mathematical functions, time-shifting functions, time scaling function, or the like). Further, in response to a user selection of the ontology functions tool, context service 122 can add a set of natural language instructions to the prompt of an LLM, instructing the LLM that a user may ask one or more questions regarding one or more selected ontology functions.

Moreover, tool(s) 126 can include a set of additional natural language instructions, added to the prompt of an LLM (e.g., via context service 122) in response to a user selection of one or more tool(s) 126. In one implementation, the additional natural language instructions can instruct LLM 123 and/or external LLM 130 to generate a response in accordance with a pre-defined structure. As an illustrative example, in response to a user selection of the data object type selector tool, context service 122 can add instructions to an LLM, to respond with the following structure: a data object type identification, a data object type's common name, a category, and/or a description. Descriptions can further include a unique identifier that an external application may recognize as a stand-in for a data set and/or a set of instructions describing additional information an LLM may require to answer the user's query. Advantageously, an LLM's response, formatted according to the structure herein, can be passed to and executed by one or more external applications.

Users may use user device(s) 150 to view and/or interact with a GUI generated by the user interface service 121. For example, the user device(s) 150 can include a wide variety of computing devices, including personal computing devices, terminal computing devices, laptop computing devices, tablet computing devices, electronic reader devices, mobile devices (e.g., desktop computer, notebook computer, smartphone, or any other type of computing device) and associated software (e.g. a browser capable of rendering output from information provided by, for example, user interface service 121).

External system(s) 140 can include a third-party server and/or data store implemented as a computer system having logical elements. In an example implementation, the logical elements may include program instructions recorded on one or more machine-readable storage media. Alternatively, the logical elements may be implemented in hardware, firmware, or a combination thereof. The external system(s) 140 may include one or more modules. In various implementations, the external system(s) 140 can include external data set(s) 142. External data set(s) 142 can be located external to the system 120, for example within one or more external system(s) 140.

External data set(s) 142 can include a datastore and/or other data structure storing one or more data set(s). External data set(s) 142 can be functionally similar or the same as internal data set(s) 125. For example, external data set(s) 142 can include data gathered from real-world events, a system or sub-system, and/or a natural phenomenon. In various implementations, external data set(s) 142 can include data from LLM 123, external LLM 130, user device(s) 150, external system(s) 140, user interface service 121, context service 122, tool(s) 126 and/or the system 120 as defined by, for example, data set(s) service 124. Further, user device(s) 150, user interface service 121, context service 122, and/or data set(s) service 124 can access and/or generate external data set(s) 142.

Data within external data set(s) 142 may be assigned a unique identifier, and/or assigned a unique identifier to any portion of data associated with the external data set(s) 142 (e.g., data objects, data object types, properties, property types, and/or the like). External data set(s) 142 can be accessed, configured, and/or referenced by data set(s) service 124. Further, external data set(s) 142 can be constructed based on an ontology as determined by data set(s) service 124, such that one or more data set(s) and/or a portion of one or more data set(s) (e.g., data objects, data object types, properties, property types, and/or the like) includes similar structure. For example, one or more data sets of external data set(s) 142 can be structured by an ontology model to provide consistent location, formatting, and/or the like, for data objects, data object types, properties, property types, and/or the like.

External LLM 130 can be functionally the same and/or similar to internal LLM 123. External LLM 130 may be hosted by, for example, a third party platform. External LLM 130 can be any type of language model, that has been trained on a larger data set and has a larger number of training parameters compared to a regular language model. External LLM 130 can understand more intricate patterns and generate text that is more coherent and contextually relevant due to its extensive training. Thus, External LLM 130 may perform well on a wide range of topics and tasks. External LLM 130 may include a NN trained using self-supervised learning. External LLM 130 may be of any type, including a QA LLM that may be optimized for generating answers from a context, a multimodal LLM/model, and/or the like. External LLM 130 (and/or other models of the present disclosure), may include, for example, attention-based and/or transformer architecture or functionality. LLMs such as External LLM 130 can be extremely useful for natural language processing, including receiving natural language prompts from for example, user interface service 121, context service 122, data set(s) service 124, data set(s) 125, tool(s) 126, external data set(s) 142, user device(s) 150, or the like, and providing natural language responses based on the text on which the model is trained.

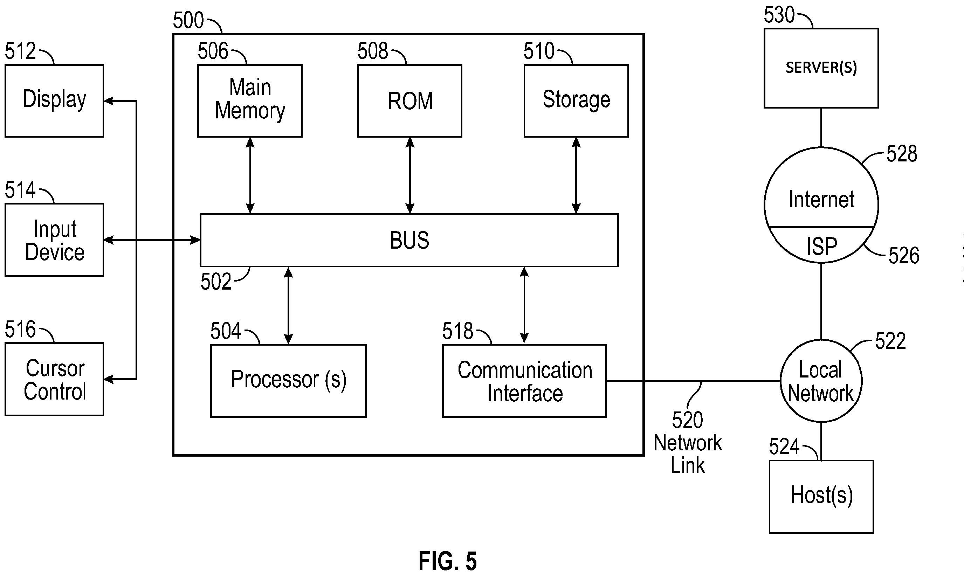

The network 110 can include any one or more communications networks, such as the Internet. The network 110 may be any combination of local area network and/or a wireless area network or the like. Accordingly, various components of the computing environment 100, including the system 120, can communicate with one another directly or indirectly via any appropriate communications links and/or networks, such as network 110 (e.g., one or more communications links, one or more computer networks, one or more wired or wireless connections, the Internet, any combination of the foregoing, and/or the like). Similarly, the various components (e.g., as described below) of the system 120 and the computing environment 100 may, in various implementations, communicate with one another directly or indirectly via any appropriate communications links (e.g., one or more communications links, one or more computer networks, one or more wired or wireless connections, the Internet, any combination of the foregoing, and/or the like). Figure 5, described below, provides additional examples of aspects of implementations of such components of the computing environment 100, the system 120, and the like.

### III. Example Object-Centric Conceptual Data Model

FIG. 2 illustrates an object-centric conceptual data model according to an implementation of an example visualization system 250 using an ontology 285.

The example visualization system 250 may correspond to the system 120 of FIG. 1 or any of the subcomponents of the system 120. Additionally, the system 120 and/or another component of the computing environment 100 can structure data according to an object-centric data model represented by an ontology described herein, thereby eliminating ambiguity, and enabling multiple components of the computing environment 100 to reference the same data using a common unique identifier. This description is provided for the purpose of providing an example and is not intended to limit the techniques to the example data model, the example database system, or the example database system's use of an ontology to represent information..

In one implementation, a body of data is conceptually structured according to an object-centric data model represented by the ontology 285. The conceptual data model is independent of any particular database used for durably storing one or more database(s) 280 based on the ontology 285. For example, each object of the conceptual data model may correspond to one or more rows in a relational database or an entry in Lightweight Directory Access Protocol (LDAP) database, or any combination of one or more databases. In some implementations, the database 280 may include one or more of the log data, data objects, and/or the process data.

An ontology 285, as noted above, may include stored information providing a data model for storage of data in the database 280. The ontology 285 may be defined by one or more object types, which may each be associated with one or more property types. At the highest level of abstraction, data object 281 is a container for information representing things in the world. In some examples, data object 281 may be a data object of the data objects 281n. For example, data object 281 can represent an entity such as a person, a place, an organization, a market instrument, or other noun. Data object 281 can represent an event that happens at a point in time or for a duration. Data object 281 can represent a document or other unstructured data source such as an e-mail message, a news report, or a written paper or article. Each data object 281 is associated with a unique identifier that uniquely identifies the data object within the database system.

Different types of data objects may have different property types. For example, a "Person" data object might have an "Eye Color" property type and an "Event" data object might have a "Date" property type. Each property 283 as represented by data in the visualization system 250 may have a property type defined by the ontology 285 used by the database 280.

Objects may be instantiated in the database 280 in accordance with the corresponding object definition for the particular object in the ontology 285. For example, a specific monetary payment (e.g., an object of type "event") of US$30.00 (e.g., a property of type "currency") taking place on 3/27/2009 (e.g., a property of type "date") may be stored in the database 280 as an event object with associated currency and date properties as defined within the ontology 285. The data objects defined in the ontology 285 may support property multiplicity. In particular, a data object 281 may be allowed to have more than one property 283 of the same property type. For example, a "Person" data object might have multiple "Address" properties or multiple "Name" properties.

Each link 282 represents a connection between two data objects 281n. In one implementation, the connection is either through a relationship, an event, or through matching properties. A relationship connection may be asymmetrical or symmetrical. For example, "Person" data object A may be connected to "Person" data object B by a "Child Of' relationship (where "Person" data object B has an asymmetric "Parent Of' relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just some examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document.

Each data object 281 can have multiple links 282n with another data object 281 to form a link set 284. For example, two "Person" data objects representing a husband and a wife could be linked through a "Spouse Of" relationship, a matching "Address" property, and one or more matching "Event" properties (e.g., a wedding). Each link 282 as represented by data in a database may have a link type defined by the database ontology used by the database.

### IV. Example Functionality of the Data Set Management System

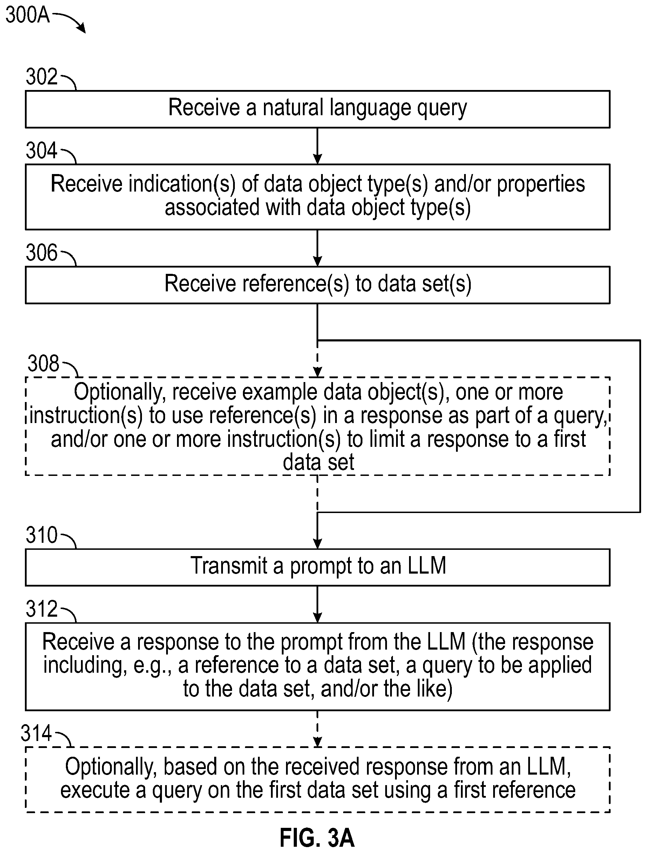

FIGS. 3A-3D are flow charts illustrating example operations of the system 120 (and/or various other aspects of the example computing environment 100), according to various embodiments. The blocks of the flow charts illustrate example implementations, and in various other implementations various blocks may be rearranged, optional, and/or omitted, and/or additional block may be added. In various implementations, the example operations of the system illustrated in FIGS. 3A-3D may be implemented, for example, by the one or more aspects of the system 120, various other aspects of the example computing environment 100, and/or the like.

FIG. 3A is a flow chart depicting an example routine 300A for referencing and managing data set(s) with a large language model as part of system 120. As noted above, the system 120 can add, to the prompt of an LLM, one or more reference(s) to data set(s), additional information about the referenced data set (including, for example, information regarding data object types of the referenced data set), one or more tools to help an LLM understand and answer the user's request, and/or a natural language query. Thus such features of the system 120 can reduce the complexity and quantity of tokens passed to an LLM, reducing the risk of partial comprehension, and/or misinterpretation of context.

At block 302, the system 120 can receive a natural language query. The user may request, via a natural language query provided by the system 120 (e.g., user interface service 121), that an LLM query information from one or more large data sets, information associated with one or more selected data object types, and/or information associated with data objects, data object types, properties of data object types, ontology functions, or the like. Additionally and/or alternatively, the system 120 may receive from a user, additional natural language information associated with the natural language query. For example, the additional information can include a requested format for a response from an LLM.

At block 304, the system 120 can receive indication(s) of data object type(s) and/or properties associated with data object type(s). For example, the system 120 can receive one or more examples of data object types, properties associated with data object types, data objects, property types, and/or descriptions of any data associated with a data set. The indication(s) of data object type(s) and/or properties associated with data object type(s) can include characteristics of a referenced data set, to provide an LLM with context for a unique identifier. The one or more indication(s) can be generated by the system 120, from data based on one or more internal data set(s) 125 and/or external data set(s) 142. Further, a user may select indication(s) of one or more data object types and/or properties associated with data object type(s). Additionally, the received indication(s) of data object type(s) and/or properties associated with data object type(s) can be determined based on an ontology as described in FIG. 2.

At block 306, the system 120 receives reference(s) to data set(s). The reference(s) to data set(s) can be, for example, one or more unique identifier(s). As described above, a unique identifier can include a natural language word and/or a phrase that references data set(s), data objects, data object types, properties, property types, and/or the like. The reference(s) to data set(s) can be received from a user input, and/or generated by the system 120 based on, for example, selection of one or more tools. As described above, the system 120 can assign a unique identifier to data set(s), and/or assign a unique identifier to any portion of data associated with one or more data sets (e.g., data objects, data object types, properties, property types, and/or the like). Advantageously, passing a natural language word and/or a phrase to the prompt of an LLM, which is optimized to operate with natural language, can enable the LLM to effectively process data and/or determine an appropriate response for a given query.

To provide consistency across referenced data set(s), data objects, data object types, properties, property types, and/or the like, the system 120 may construct data set(s) and/or request that data sets hosted externally are configured based on an ontology as determined by the system 120. As described above, an ontology can be stored information that provides a data model for storage of data in one or more data sets. The system 120 can configure an ontology such that each data set includes similar structure. For example, an ontology model can be applied by the system 120 to one or more data sets to provide consistent location, formatting, and/or the like, for data objects, data object types, properties, property types, and/or the like. Advantageously, applying a consistent structure to data sets eliminates ambiguity, enabling multiple functions (e.g., an LLM, models, applications, operations, and/or the like) of the system 120 to reference data with a single unique identifier.

As an optional step, the example routine 300A may execute block 308. At block 308, the system 120 receives example data object(s), one or more instructions(s) to use reference(s) in a response as part of a query, and/or one or more instruction(s) to limit a response to a first data set. As described above, the user and/or the system 120 may add additional information and/or additional instructions to the prompt of an LLM such as examples of data objects from one or more data set(s), one or more instructions to use references (e.g., unique identifier(s)) as part of a query, and/or to instructions to limit a response to a first data set.

The example data object(s), instruction(s) to use reference(s) in a response as part of a query, and/or instruction(s) to limit a response to a first data set, can also be used by the system 120 to fine tune the scope of a user's request, instruct an LLM to generate a narrow response to the user's query, and/or instruct an LLM to respond to a user's query in accordance with a specified structure. For example, the system 120 may instruct an LLM to output a response in a specific structure such that an external application may execute a further task (and/or routine) using the LLM's response on a first data set.

At block 310, the system 120 transmits a prompt to an LLM. The transmitted prompt can include any of the information (e.g., natural language queries of block 302, indication(s) of data object type(s) and/or properties associated with data object type(s) of block 304, reference(s) to data set(s) of block 306 and/or example data object(s), instruction(s) to use reference(s) in a response as part of a query, and/or instruction(s) to limit a response to a first data set of block 308. The system 120 can advantageously overcome and/or work around the limitations mentioned above by adding the information of blocks 302-308 to the prompt of an LLM. Such features of the system 120 can reduce the complexity and quantity of tokens passed to an LLM, thus reducing the risk of partial comprehension, and/or misinterpretation of context.

At block 312, the system 120 receives a response to the prompt from the LLM. The response can include, for example, a reference to a data set, a query to be applied to the data set, and/or the like. Additionally, the system 120 can receive a response in accordance with a determined structure as described herein. As an illustrative example, the LLM response can include the following structure: a data object type identification, a data object type's common name, a category, and/or a description. As described above, descriptions can further include a unique identifier that an external application may recognize as a stand-in for data set(s) and/or a set of instructions describing information an LLM requires. Advantageously, an LLM's response, formatted according to the structure herein, can be parsed and passed to one or more external applications and executed.

As an optional step, the example routine 300A may execute block 314. At block 314, the system 120 can execute a query on the first data set using a first reference. The instructions to execute a query on the first data set using a first reference can be from the received response from an LLM. The system 120 may employ a third-party application (e.g., a "tool" identified by the LLM) to execute a query on the first data set using the first reference to the first data set. Thus, the computing power of an LLM can be leveraged to generate instructions for a third-party application to execute.

Alternatively, the system 120 may receive a response from the LLM requesting additional information and/or additional instructions from the user. An example response from an LLM can include a request for one or more samples of data from one or more data sets (e.g., one or more data objects, data object types, properties, property types, or the like), a request for one or more additional unique identifiers, and/or a request including suggestions for narrowing search results requested by the user. The user, one or more external applications, and/or the system 120 may further add additional information and/or additional instructions to the prompt of an LLM. In response to the additional information and/or additional instructions, an LLM can respond to the user's request accordingly.

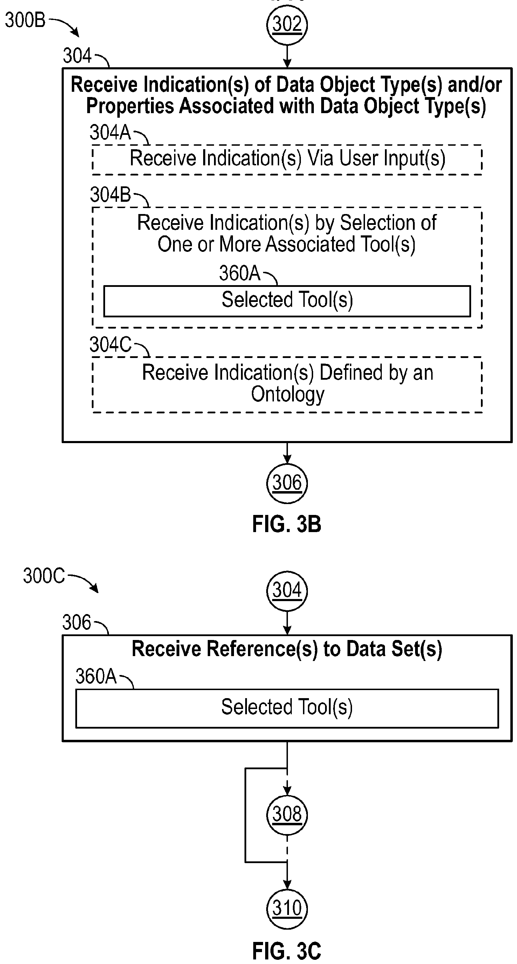

FIG. 3B is a flow chart depicting an example routine 300B for receiving indication(s) of data object type(s) and/or properties associated with data object type(s). Example routine 300B may be included as part of, or executed separately from example routine 300A.

The routine 300B begins at block 302. Block 302 can be the same and/or similar to block 302 of example routine 300A of FIG. 3A.

At block 304, the system 120 receives indication(s) of data object type(s) and/or properties associated with data object type(s). For example, the system 120 can receive one or more examples of data object types, properties associated with data object types, data objects, property types, and/or descriptions of any data associated with a data set. As mentioned above, the indication(s) of data object type(s) and/or properties associated with data object type(s) can include characteristics of a referenced data set, to provide an LLM with context for a unique identifier. As part of block 304, indication(s) of data object type(s) and/or properties associated with data object type(s) can be received in response to user input(s) as depicted in block 304A, in response to a selection of one or more tools as depicted in block 304B, and/or defined by an ontology as depicted in block 304C.

At block 304A, the system 120 may receive a selection of, and/or receive user generated text including indication(s) of data object type(s) and/or properties associated with data object type(s). A GUI generated by, for example, user interface service 121, may display a query requesting text from the user, and/or a display a query where the user may search for one or more indication(s) of data object type(s) and/or properties associated with data object type(s). In response to the user input, the system 120 can add the indication(s) of data object type(s), indication(s) of properties associated with data object type(s) selected by the user, and/or a set of natural language instructions to the prompt of an LLM, that the user may ask one or more questions regarding the selected data object type(s) and/or properties associated with data object type(s).

At block 304B, the system 120 can receive one or more indication(s) of data object type(s) and/or properties associated with data object type(s) by selection of one or more associated tools. Tools may be selected by a user and/or determined by the system 120 in response to a user input. For example, after a user selection of a data object type selector tool along with selection of one or more data object types, the system 120 can receive data object type(s) and/or properties associated with the selection of the one or more data object type(s).

As part of block 304B, block 360A includes one or more tools that may be selected by the user (e.g., one or more of tool(s) 126 as described herein). The tools can include for example, a data object selection tool, an ontology functions tool, an apply actions tool, and/or an additional tool generated by the system 120 to execute instructions associated with one or more data set(s), data objects, data object type(s), properties of data objects, property type(s), or the like. As mentioned above, in response to a user and/or system selection of one or more tools, the system can add additional information and/or instructions to the prompt of an LLM, to help the LLM gain more information about a specific user defined task and/or a system-generated task, to fine tune the scope of instructions passed to the LLM, and/or to instruct the LLM to generate a response using a specific structure such that an external application may receive and/or execute a task (e.g., a filter or query) in accordance with the LLM's response.

At block 304C the system 120 can receive indication(s) defined by an ontology. As mentioned above, an ontology may include stored information providing a data model for storage of data in a database. The ontology may be defined by one or more object types, which may each be associated with one or more property types. For example, the system 120 can receive indication(s) associated with a unique identifier that references data object type(s) within the database system based on an ontology.

The routine 300B can continue at block 306. Block 306 can be the same and/or similar to block 306 of example routine 300A of FIG. 3A.

FIG. 3C is a flow chart depicting an example routine 300C for receiving reference(s) to data set(s). In one implementation, routine 300C can be included as part of, and/or executed separately from example routine 300A.

The routine 300C begins at block 304. Block 304 can be the same and/or similar to block 304 of example routine 300A of FIG. 3A, and/or block 304 of routine 300B of FIG 3B.

At block 306, the system 120 receives reference(s) to data set(s). As mentioned above, the reference(s) to data set(s) can be, for example, a unique identifier. A unique identifier can include a natural language word and/or a phrase that references data set(s), data objects, data object types, properties, property types, and/or the like as described herein. Further, the system 120 can assign a unique identifier to data set(s), and/or assign a unique identifier to any portion of data associated with one or more data sets (e.g., data objects, data object types, properties, property types, and/or the like) based on the selection of one or more tools.

As part of block 306, block 360A includes one or more tools that may be selected by the user (e.g., one or more of tool(s) 126 as described herein). Block 360A can be the same and/or similar to block 360A of example routine 300B of FIG. 3B. As mentioned above, the tools can include for example, a data object selection tool, an ontology functions tool, an apply actions tool, and/or an additional tool generated by the system 120 to perform any necessary actions associated with referencing one or more data set(s), such as for example, generating a unique identifier in response to the selection of one or more tools.

As an optional step, the example routine 300C can continue to block 308 and/or the example routine 300C can proceed to block 310. Block 308 and block 310 can be the same as and/or similar to that of block 308 and/or 310 of example routine 300A of FIG. 3C.

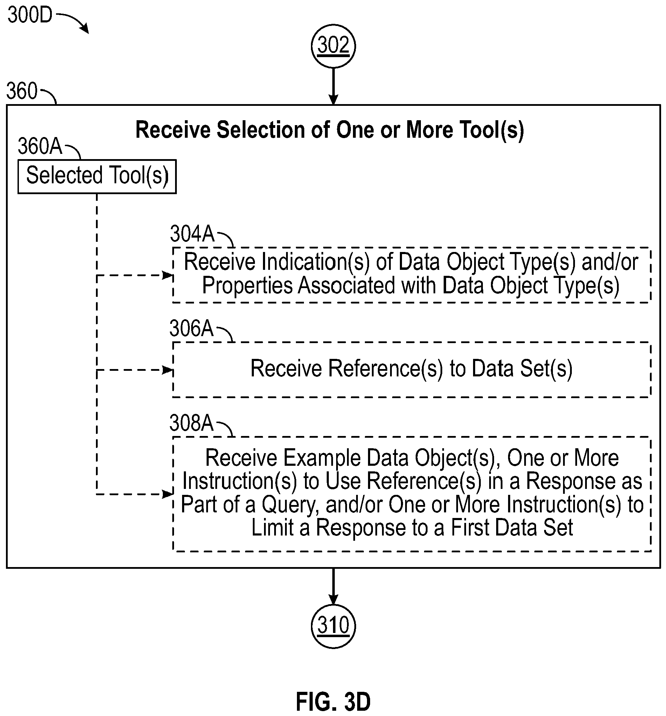

FIG. 3D is flow chart depicting an example routine 300D for receiving selection of one or more tool(s) (e.g., tool(s) 126) as part of a data set management system 120. In one implementation, routine 300D can be included as part of, or executed separately from example routine 300A.

The routine 300D begins at block 302. Block 302 can be the same and/or similar to block 302 of example routine 300A of FIG. 3A.

At block 360, the system 120 receives selection of one or more tool(s). The tools can be one or more of the selected tool(s) of block 360A as described herein. Tools can include for example, a data object selection tool, an ontology functions tool, an apply actions tool, and/or an additional tool generated by the system 120 to perform any necessary actions associated with one or more data set(s), data objects, data object type(s), properties of data objects, property type(s), or the like.

Optionally, blocks 304A, 306A, and/or 308A may be executed in response to the user selection of one or more tools at block 360.

At block 304A, the system 120 can optionally receive indication(s) of data object type(s) and/or properties associated with data object type(s) in response to the selected tools. For example, the system 120 can receive one or more examples of data object types, properties associated with data object types, data objects, property types, and/or descriptions of any data associated with the selected tool by the user. As mentioned above, the indication(s) of data object type(s) and/or properties associated with data object type(s) can include characteristics of a referenced data set, to provide an LLM with context for a unique identifier.

At block 306A, the system 120 can optionally receive reference(s) to data set(s) in response to the selected tools. As mentioned above, the reference(s) to data set(s) can be, for example, a unique identifier in response to one or more selected tools. A unique identifier can include a natural language word and/or a phrase that references data set(s), data objects, data object types, properties, property types, and/or the like as described herein. Further, the system 120 can assign a unique identifier to data set(s), and/or assign a unique identifier to any portion of data associated with one or more data sets (e.g., data objects, data object types, properties, property types, and/or the like) based on the selection of one or more tools.

At block 308A, the system 120 can optionally receive example data object(s), one or more instruction(s) to use reference(s) in a response as part of a query, and/or one or more instruction(s) to limit a response to a first data set. In an example implementation, in response to a user selection of the data object type selection tool and/or selection of one or more data object types, the system 120 can receive: example data object(s) that are associated with the selected one or more data object types; reference(s) associated with the selected one or more data object types; and/or instructions to limit a response to a first data set, where the first data set may be associated with the selected one or more data object types. Advantageously, after the selection of one or more tools, the system 120 can automatically add information and/or instructions to the prompt of an LLM, to help the LLM gain more information about a specific user defined task and/or a system-generated task, to fine tune the scope of instructions passed to the LLM, and/or to instruct the LLM to generate a response using a specific structure such that an external application may receive and/or execute a task (e.g., a filter or query).

The routine 300D can continue to block 310. Block 310 can be the same and/or similar to block 310 of example routine 300A of FIG. 3A.

### V. Example User Interfaces of a Data Set Management System

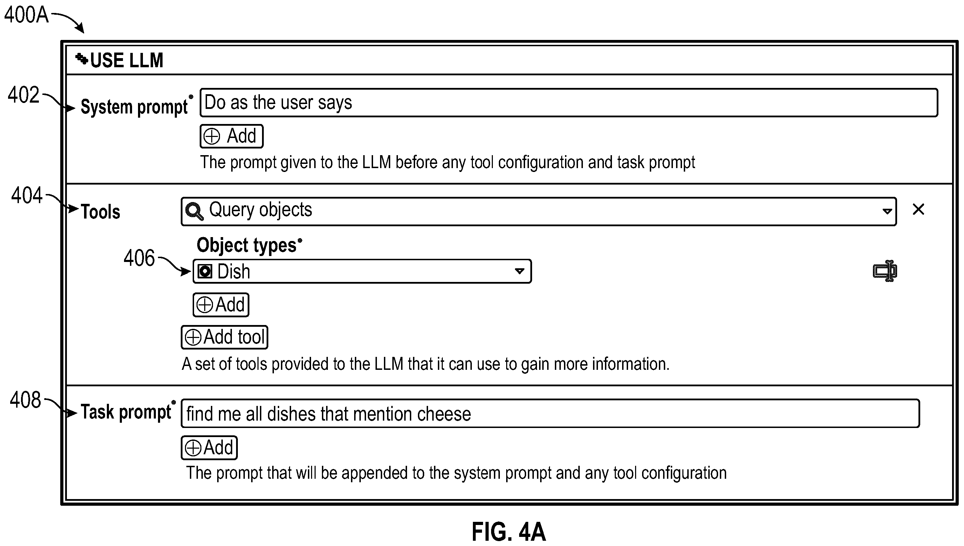

FIGS. 4A-4D illustrate an example user interface of the system 120 as provided by, for example, user interface service 121. The example user interface(s) are provided for the purpose of providing example implementations of aspects of the data set management system 120, and are not intended to limit the implementations to the example user interface(s) provided. FIG. 4A illustrates an example user interface 400A permitting the user to select various criteria when managing one or more data sets. The example user interface 400A illustrates various example functionality of the system 120 described, for example, in reference to blocks 302, 304, 306, 308, 310, and/or 312 of routine 300A, and/or block 304 of routine 300B, block 306 of routine 300C, and/or block 360 of routine 300D. Advantageously, the example user interface 400A may allow the user to enter text into a natural language query, select one or more tools including object types, and/or enter text into a task before sending a prompt to an LLM.

As part of example user interface 400A, a user may add text into a natural language query of the system prompt 402. In various implementations, the system prompt 402 can add additional natural language instructions to the prompt of an LLM, that if the LLM generated response indicates that further information is necessary to answer the user's query, the LLM's response can include a request for additional information and/or additional instructions from the user, as, for example, depicted in block 308 of FIG. 3A. Additionally, the system prompt 402 may include text from a user, requesting that an LLM query information from one or more large data sets associated with one or more selected data object types, as, for example, depicted in block 304 and/or 306 of FIG. 3A. Although an LLM may not have the technical capabilities to query a large data set, the system prompt 402 can include additional user defined text to add sufficient context to the prompt of an LLM such that the LLM generated response includes a sample of data and/or instructions for an external application to reference, as, for example, depicted in block 314 of FIG. 3A. In various implementations, the instructions for an external application can include a unique identifier referencing a data set and/or a natural language description of a filter to apply to the referenced data set, to answer the user's query. In the example user interface 400A, the system 120 has received aa natural language query from the user which may be added to the prompt of an LLM, stating "do as the user says". In various implementations, the example user interface 400A can omit system prompt 402, and/or include system prompt 402 as part of one or more aspects of the example user interface 400A, such as for example, part of tools 404, and/or task prompt 408.

The example user interface 400A can further include a tools 404. The tools 404 may be selected by a user and/or determined by the system 120 in response to a user input as, for example, depicted in block 360 of FIG. 3D. As described above, in response to a user selection of one or more tools 404, the system 120 can add additional information and/or instructions to the prompt of an LLM, to help the LLM gain more information about a specific user defined task and/or a system-generated task, to fine tune the scope of instructions passed to the LLM, and/or to instruct the LLM to generate a response using a specific structure such that an external application may receive and execute a task (e.g., a filter or query).

In the example user interface 400A, the user has selected "query objects" which can represent, for example, selection of a data object type selector tool. As discussed above, the data object selector tool can include natural language text, instructing an LLM to generate a filter and/or provide information in response to a user's selection of one or more data object types and/or a user defined task and/or tasks associated with the selection of one or more data object types, as, for example, depicted in block 304 of FIG. 3B. Additionally, tools 404 allows a user to add one or more tools to the example user interface 400A based on the user's desired tasks. For example, the user can add an ontology functions tool and/or an apply actions tool as described herein and/or another tool as generated by the system 120.

The example user interface 400A further includes a data object type selector 406. The data object type selector 406 can allow a user to select one or more data object types from a list of data object types, as, for example, depicted in block 304 of FIG. 3A-3B. Additionally, the data object type selector 406 may allow a user to search for one or more data object types via a query. Each data object type displayed in the list of data object types can be associated with one or more unique identifiers as described above. The unique identifiers can be, for example, a reference to data (e.g., data objects, data object types, properties of data object types, property types, and/or the like) associated with the data object type. In the example user interface 400A, the user has selected the object type "dish". Additionally, the example user interface 400A provides the user with the option to select one or more data object types via the data object type selector 406. Advantageously, in response to a user input selecting one or more data object types as part of the data object type selector 406, the system 120 can add a set of natural language instructions to the prompt of an LLM, that the user may ask one or more questions regarding the selected data object types.

Next, the example user interface 400A can include a task prompt 408. The task prompt 408 can be an additional natural language query, enabling a user to enter instructions requesting one or more tasks associated with one or more tools 404, as, for example, depicted in block 302 of FIG. 3A. In the example user interface 400A, the user may request that an LLM provide information associated with one or more selected data object types. Further, the user may add one or more additional task prompts to the example user interface 400A. In task prompt 408, the user may enter instructions requesting one or more tasks associated with the one or more selected tools 404.

In the task prompt 408 of example user interface 400A, the user has entered, "find me all dishes that mention cheese". In an example implementation, the system 120 can send a request to an LLM, to query information from one or more large data sets associated with the data object type "dishes" based on information included in the task prompt 408, tools 404, data object type selector 406, and/or the system prompt 402. Although an LLM may not have the technical capabilities to query a large data set associated with the data object type "dishes", the information provided as part of example user interface 400A can add sufficient context (e.g., one or more unique identifiers, additional information, tools, and/or the like) to the prompt of an LLM such that the LLM generated response includes a sample of data and/or instructions for an external application to reference. The instructions for an external application can include a unique identifier referencing a data set and/or a natural language description of a filter to apply to the referenced data set to answer the user's query, as, for example, depicted in block 312 of FIG. 3A.

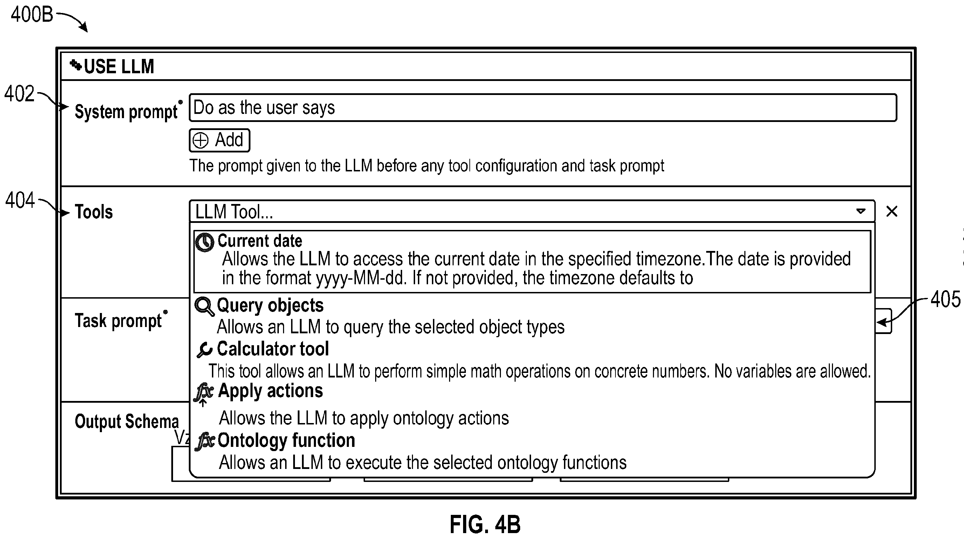

FIG. 4B is an additional illustration of an example user interface 400B for selecting one or more tools 404. As part of example user interface 400B, a user has entered text into the system prompt 402 "do as the user says". Next, the user has selected the tools 404 drop-down menu 405. As part of example user interface 400B, the drop-down menu 405 can display one or more tools (e.g., tool(s) 126) for selection by the user, as, for example, depicted in block 360A of FIGS 3B-3D.

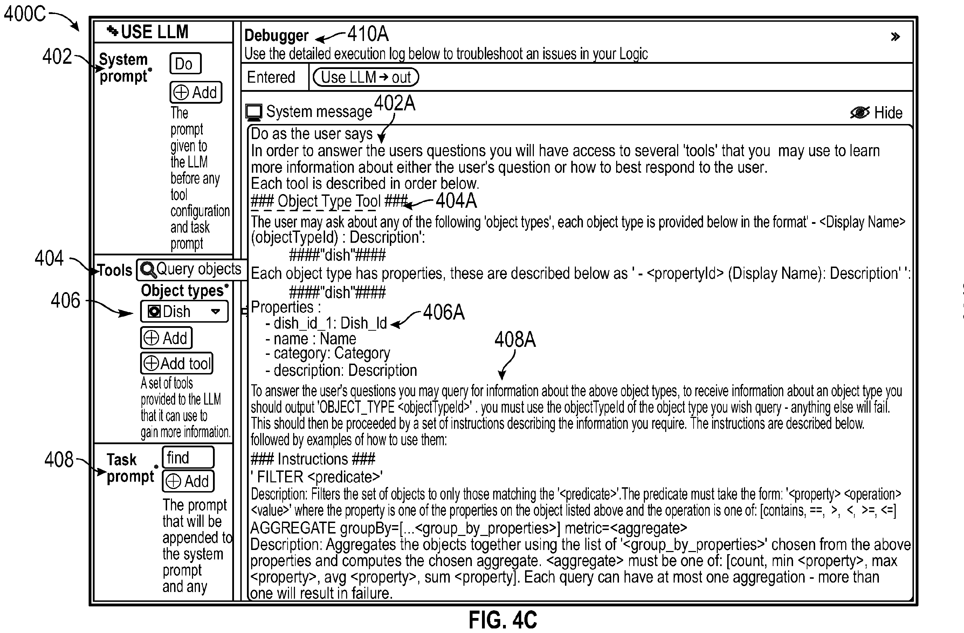

FIG. 4C is an example user interface 400C illustrating a debugger window 410A associated with the system 120. The example user interface 400C can display the system prompt 402, the tools 404, the data object type selector 406, and/or the task prompt 408 as described with reference to example user interface 400A of FIG. 4A. Further, the example user interface 400C can include a debugger window 410A, indicating text that may be added to the prompt of an LLM based on one or more user inputs and/or as generated by the system 120. For example, when the user enters text in the system prompt 402, the system 120 can generate text 402A. Text 402A can be formatted by the system 120 such that both the user's text from the system prompt 402 and/or system-generated text associated with the system prompt 402 are placed in the beginning of the prompt of an LLM, as, for example, depicted in block 310 of FIG. 3A. In the example user interface 400C, the first line of the LLM prompt includes the text of the system prompt 402. Additionally, the next few lines of the LLM prompt include system-generated text in response to system prompt 402, beginning with " In order to..." Advantageously, system-generated text may be added to the prompt of an LLM, to help the LLM gain more information about a specific user defined task and/or a system-generated task, to fine tune the scope of instructions passed to the LLM, and/or to instruct the LLM to generate a response using a specific structure.

Next, the example user interface 400C debugger window 410A can include tools text 404A. Tools text 404A can include natural language instructions associated with one or more data object types and/or natural language instructions in response to a user selection of one or more tool(s) (e.g., tool(s) 126). Tools text 404A can be generated by a user and/or determined by the system 120 in response to a user input. In the example user interface 400C, the user has selected the object type selector tool. The prompt of an LLM includes system-generated instructions, instructing an LLM that the user may ask question(s) about one or more user defined data object types. Additionally, the prompt can include text instructing the LLM to generate a response according to a specific format for each of the user-selected data object types, as, for example, depicted in block 308A of FIG. 3D. In the example user interface 400C, after the user has selected data object type "dish" the tools text 404A is populated with instruction(s) including a format the LLM should use when referencing the selected data object type "dish."

Further, the example user interface 400C includes system-generated text including details 406A regarding the user selected data object types, as part of the data object type selector tool. The details 406A are natural language instructions provided to an LLM that may include a unique identifier, as, for example, depicted in block 306A of FIG. 3D. For example, details 406A can include additional information and/or instructions providing an LLM with information associated with one or more datasets in response to the selected object type "dish". In the example user interface 400C, details 406A includes a unique identifier for the selected data object type "dish", the unique identifier being referenced as the same, "dish."

As shown in example user interface 400C, the details 406A can include instructions and/or information regarding one or more properties of the selected data object type(s), as, for example, depicted in block 304A of FIG. 3D. For example, details 406A includes information and/or instructions added to the prompt of an LLM, including one or more properties of the selected data object type "dish" (e.g., an ID, a common name, a category, and/or a description). Further, details 406A can include instructions requesting that the LLM respond according to a provided structure (e.g., the structure according to the "Properties" of the selected data object types). For example, details 406A can include information and/or instructions, that an LLM response to the natural language query should be formatted according to the "Properties" section, including an ID, a name, a category, and/or a description. In various implementations, structure added to the prompt of an LLM can include more or less information. For example, the structure can be any format added to the prompt of an LLM including but not limited to specified formats for data objects, data object types, properties, property types, or the like.

Along with the natural language instructions associated with the unique identifier, and/or the selected data object type, details 406A can further include additional text 408A, instructing an LLM to generate a filter and/or provide information in response to the user's selection of one or more data object types, and/or a user defined task and/or tasks associated with the selection of one or more data object types, as, for example, depicted in block 308A of FIG. 3D. Optionally, details 406A can include additional information and/or instructions added to the prompt of an LLM, including example data object(s) from one or more datasets associated with the selected data object type "dish" (e.g., beef sliders, tiramisu, chicken parmesan, etc.) In the example user interface 400C, the additional text 408A includes instructions for filtering data and/or instructions to aggregate data in response to the user's selection of the data object type "dish".

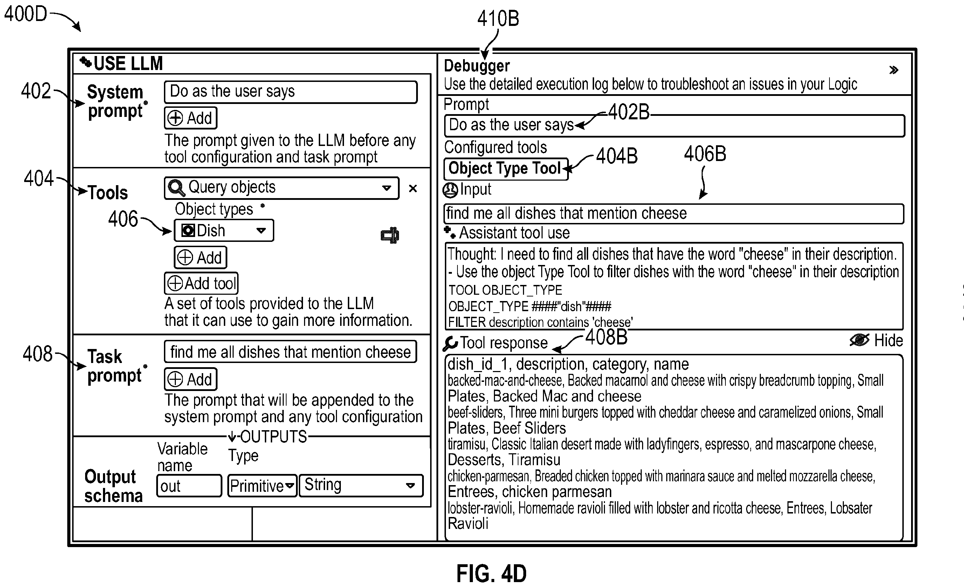

FIG. 4D is an example user interface 400D illustrating a debugger window 410B, which represents a detailed execution log for a requested query. Example user interface 400D depicts a system prompt 402, tools 404, data object type selector 406, and/or a task prompt 408. In example user interface 400D, data as part of the system prompt 402, the tools 404, the data object type selector 406, and/or the task prompt 408 can be, for example, the same as example user interface 400C of FIG. 4C.

Further, the debugger window 410B displays a query 402B. The query 402B depicts text including an example of the user's natural language query, input into the system prompt 402. Example user interface 400D further includes an indication of the selected tool 404B, corresponding with the user's selected tool 404, as, for example, depicted in block 360A of FIGS. 3B-3D.

Debugger window 410B further includes a summary 406B. The summary 406B can include, for example, results generated by the LLM based on a prompt transmitted to the LLM, as, for example, depicted in block 310 of FIG. 3A. In various implementations, the summary 406B can be the result of a prompt including: the natural language query and/or system-generated instructions associated with system prompt 402 as depicted in text 402A of FIG 4C, user selected and/or system-generated information and/or instructions associated with a selected tool 404 as depicted in tools text 404A of FIG. 4C, user selected and/or system-generated information and/or instructions associated with the selected data object type(s) of data object type selector 406 as depicted in details 406A of FIG. 4C, and/or the natural language query and/or system-generated instructions of task prompt 408, as depicted in text 408A of FIG. 4C. In various implementations, the summary 406B may include results generated by the LLM, based on more and/or less information as described above. For example, system prompt 402, tools 404, data object type selector 406, and/or task prompt 408 may be optional.

Summary 406B includes "input" providing a brief description of the natural language query as input by the user in, for example, task prompt 408 and/or system prompt 402. Additionally, summary 406B includes an "Assistant tool use". The Assistant tool use can be a response generated by the LLM. As depicted in summary 406B, the LLM response incudes a "thought" summarizing the task generated by the system 120 and transmitted via a prompt to the LLM.

Along with the LLM generated "thought", summary 406B includes a response form the LLM in accordance with the instructions from text 408A of FIG. 4C, which instructs the LLM to respond to the user's query via a specific structure. As requested in text 408A, the LLM response (e.g., "Assistant tool use") as part of summary 406B includes a query for information about a selected data object type (e.g., "Use the object type tool to filter dishes with the word "cheese" in their description"). The LLM response has generated an output according to the structure defined in 408A ("OBJECT_TYPE<objectTypeId>"), as well as a set of instructions describing the information required (e.g., a tool query, such as FILTER description contains 'cheese'), and identification of the selected tool (e.g., TOOL OBJECT_TYPE). Advantageously, the response of summary 406B can be parsed and/or passed to an external application (e.g., a tool) and executed to answer the user's query on a large data set, as, for example, depicted in block 314 of FIG. 3A.

The example user interface 400D further includes a tool response 408B. The tool response 408B can be generated by, for example, an external application (e.g., a tool) executing the query of summary 406B as, for example, depicted in block 314 of FIG. 3A. Alternatively, the tool response 408B can be generated by the response from an LLM, as, for example, depicted in block 312 of FIG. 3A. In various implementations, the LLM response can include information of tool response 408B when one or more data objects are provided as information and/or instructions to the prompt of an LLM. For example, as part of details 406A, text 408A, and/or another part of instructions and/or information added to the prompt of an LLM.

Tool response 408B may be generated by the LLM, in response to instructions and/or information associated with the transmitted prompt. For example, tool response 408B may include a response from an LLM based on: the query of system prompt 402 and/or task prompt 408 as illustrated in text 402A; the structure provided by tools 404 including one or more properties of a selected data object type of data object type selector 406, as illustrated in 404A and 406A (e.g., the structure of properties associated with the selected data object types including an ID, a name, a category, and/or a description); and/or the system-generated information and/or instructions provided by one or more of system prompt 402, tools 404, data object type selector 406, and/or task prompt 408 as depicted in 408A. As an illustrative example, tool response 408B can include a listing of dishes including cheese according to a specified structure (e.g., ID, description, category, name): the dish identification of "baked-mac-and-cheese" having a description including "Baked macaroni and cheese with a crispy breadcrumb topping." The category for the first response is "Small Plates" and the name of the first response is "Baked Mac and Cheese. Thus, the system 120 can advantageously overcome and/or work around the limitations mentioned herein by adding references to data set(s), information regarding data object types, and/or natural language queries to the prompt of an LLM.

### VI. Example Computing Environment for a Data Set Management System

In an implementation the system (e.g., one or more aspects of the system 120, one or more aspects of the computing environment 100, and/or the like) may include, or be implemented in, a "virtual computing environment". As used herein, the term "virtual computing environment" should be construed broadly to include, for example, computer-readable program instructions executed by one or more processors (e.g., as described in the example of FIG. 5) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may include a modification of the operation of the virtual computing environment in response to inputs and according to various rules. Other functionality implemented by the virtual computing environment (as described throughout this disclosure) may further include modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may include one or more virtual machines, containers, and/or other types of emulations of computing systems or environments. In some implementations the virtual computing environment may include a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can include a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein includes an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which includes one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a GUI, among other things.

For example, Figure 5 shows a block diagram that illustrates a computer system 500 upon which various implementations and/or aspects (e.g., one or more aspects of the computing environment 100, one or more aspects of the system 120, one or more aspects of the user device(s) 150, one or more aspects of the external system(s) 140, and/or the like) may be implemented. Multiple such computer systems 500 may be used in various implementations of the present disclosure. Computer system 500 includes a bus 502 or other communication mechanism for communicating information, and a hardware processor, or multiple processors, 504 coupled with bus 502 for processing information. Hardware processor(s) 504 may be, for example, one or more general purpose microprocessors.

Computer system 500 also includes a main memory 506, such as a random-access memory (RAM), cache and/or other dynamic storage devices, coupled to bus 502 for storing information and instructions to be executed by processor 504. Main memory 506 also may be used for storing temporary variables or other intermediate information during execution of instructions to be executed by processor 504. Such instructions, when stored in storage media accessible to processor 504, render computer system 500 into a special-purpose machine that is customized to perform the operations specified in the instructions. The main memory 506 may, for example, include instructions to implement server instances, queuing modules, memory queues, storage queues, user interfaces, and/or other aspects of functionality of the present disclosure, according to various implementations.

Computer system 500 further includes a read only memory (ROM) 508 or other static storage device coupled to bus 502 for storing static information and instructions for processor 504. A storage device 510, such as a magnetic disk, optical disk, or USB thumb drive (Flash drive), and/or the like, is provided and coupled to bus 502 for storing information and instructions.

Computer system 500 may be coupled via bus 502 to a display 512, such as a cathode ray tube (CRT) or LCD display (or touch screen), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 500 may include a user interface module to implement a GUI that may be stored in a mass storage device as computer executable program instructions that are executed by the computing device(s). Computer system 500 may further, as described below, implement the techniques described herein using customized hard-wired logic, one or more ASICs or FPGAs, firmware and/or program logic which in combination with the computer system causes or programs computer system 500 to be a special-purpose machine. According to one implementation, the techniques herein are performed by computer system 500 in response to processor(s) 504 executing one or more sequences of one or more computer-readable program instructions contained in main memory 506. Such instructions may be read into main memory 506 from another storage medium, such as storage device 510. Execution of the sequences of instructions contained in main memory 506 causes processor(s) 504 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 504 for execution. For example, the instructions may initially be carried on a magnetic disk or solid-state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN (or WAN component to communicated with a WAN). Wireless links may also be implemented. In any such implementation, communication interface 518 sends and receives electrical, electromagnetic, or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the worldwide packet data communication network now commonly referred to as the "Internet" 528. Local network 522 and Internet 528 both use electrical, electromagnetic, or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### VII. Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method for referencing a data set via a large language model, the computer-implemented method comprising, by one or more hardware processors executing program instructions: receiving, via a user interface, a natural language query; receiving indications of one or more data object types, wherein each of the one or more data object types is associated with a respective one or more properties; receiving references to one or more data sets, wherein the one or more data sets are each associated with at least a respective data object type of the one or more data object types; transmitting a prompt to a large language model ("LLM"), the prompt comprising at least: the natural language query, the indications of the one or more data object types, and the references to the one or more data sets; and receiving, from the LLM, a response to the prompt, wherein the response comprises indications of: at least a first reference to a first data set of the one or more data sets, and a query to be applied to the first data set.

Clause 2. The computer-implemented method of Clause 1, wherein the indications of one or more data object types are, at least one of: specified by user via the user interface, specified by selection of one or more tools, or defined by an ontology.

Clause 3. The computer-implemented method of Clause 2, wherein the indications of one or more data object types are specified by selection of one or more tools, and wherein the one or more tools include at least one of: query objects, apply actions, or ontology functions.

Clause 4. The computer-implemented method of any of Clauses 1-3, wherein the one or more data sets comprise at least one of: data objects of a first data object type of the one or more data object types, or a natural language word associated with a first data set of the one or more data sets.

Clause 5. The computer-implemented method of any of Clauses 1-3, wherein the references to one or more data sets are associated with a selected tool.

Clause 6. The computer-implemented method of Clause 5, wherein the selected tool includes at least one of: query objects, apply actions, or ontology functions.

Clause 7. The computer-implemented method of any of Clauses 1-3, wherein the one or more data sets include each of the one or more data object types and one or more data objects of the respective one or more data object types.

Clause 8. The computer-implemented method of any of Clauses 1-7 further comprising: receiving and/or obtaining example data objects of the one or more data object types, one or more instructions to use the references in the response as part of the query, or one or more instructions to limit the response to the first data set, wherein the prompt further comprises at least one of: the example data objects of the one or more data object types, the one or more instructions to use the references in the response as part of the query, or the one or more instructions to limit the response to a first data set.

Clause 9. The computer-implemented method of Clause 8, wherein the example data objects of the one or more data object types, the one or more instructions to use the references in the response as part of the query, or the one or more instructions to limit the response to the first data set, are associated with a selected tool, and wherein the selected tool includes at least one of: query objects, apply actions, or ontology functions.

Clause 10. The computer-implemented method of any of Clauses 1-9, further comprising: executing the query on the first data set using the first reference.

Clause 11. The computer-implemented method of Clause 10, wherein the first data set includes data objects of a first data object type of the one or more data object types.

Clause 12. The computer-implemented method of Clause 11, wherein the first data set is selected by the LLM based at least in part on the first data set including data objects of the first data object type.

Clause 13. The computer-implemented method of Clause 12, wherein the references to one or more data sets comprise of one or more natural language words.

Clause 14. The computer-implemented method of any of Clauses 1-13, wherein each data object type is associated with at least one data set, wherein each data set comprises data objects, and wherein the data objects associated with the one or more properties of a subset of the data object types are included in at least one of the data sets.

Clause 15. A system comprising: one or more computer-readable storage mediums having program instructions embodied therewith; and one or more processors configured to execute the program instructions to cause the system to perform the computer-implemented method of any of Clauses 1-14.

Clause 16. A computer program product comprising one or more computer-readable storage mediums having program instructions embodied therewith, the program instructions executable by one or more processors to cause the one or more processors to perform the computer-implemented method of any of Clauses 1-14.

## Claims

1. A computer-implemented method for referencing a data set via a large language model, the computer-implemented method comprising, by one or more hardware processors executing program instructions:
receiving, via a user interface, a natural language query;
receiving indications of one or more data object types, wherein each of the one or more data object types is associated with a respective one or more properties;
receiving references to one or more data sets, wherein the one or more data sets are each associated with at least a respective data object type of the one or more data object types;
transmitting a prompt to a large language model ("LLM"), the prompt comprising at least: the natural language query, the indications of the one or more data object types, and the references to the one or more data sets; and
receiving, from the LLM, a response to the prompt, wherein the response comprises indications of: at least a first reference to a first data set of the one or more data sets, and a query to be applied to the first data set.

2. The computer-implemented method of Claim 1, wherein the indications of one or more data object types are, at least one of: specified by user via the user interface, specified by selection of one or more tools, or defined by an ontology.

3. The computer-implemented method of Claim 2, wherein the indications of one or more data object types are specified by selection of one or more tools, and wherein the one or more tools include at least one of: query objects, apply actions, or ontology functions.

4. The computer-implemented method of any of Claims 1-3, wherein the one or more data sets comprise at least one of: data objects of a first data object type of the one or more data object types, or a natural language word associated with a first data set of the one or more data sets.

5. The computer-implemented method of any of Claims 1-3, wherein the references to one or more data sets are associated with a selected tool.

6. The computer-implemented method of Claim 5, wherein the selected tool includes at least one of: query objects, apply actions, or ontology functions.

7. The computer-implemented method of any of Claims 1-3, wherein the one or more data sets include each of the one or more data object types and one or more data objects of the respective one or more data object types.

8. The computer-implemented method of any of Claims 1-7 further comprising:
receiving and/or obtaining example data objects of the one or more data object types, one or more instructions to use the references in the response as part of the query, or one or more instructions to limit the response to the first data set,
wherein the prompt further comprises at least one of: the example data objects of the one or more data object types, the one or more instructions to use the references in the response as part of the query, or the one or more instructions to limit the response to a first data set.

9. The computer-implemented method of Claim 8, wherein the example data objects of the one or more data object types, the one or more instructions to use the references in the response as part of the query, or the one or more instructions to limit the response to the first data set, are associated with a selected tool, and wherein the selected tool includes at least one of: query objects, apply actions, or ontology functions.

10. The computer-implemented method of any of Claims 1-9, further comprising:
executing the query on the first data set using the first reference.

11. The computer-implemented method of Claim 10, wherein the first data set includes data objects of a first data object type of the one or more data object types, and, preferably, wherein the first data set is selected by the LLM based at least in part on the first data set including data objects of the first data object type.

12. The computer-implemented method of Claim 11, wherein the references to one or more data sets comprise of one or more natural language words.

13. The computer-implemented method of any of Claims 1-12, wherein each data object type is associated with at least one data set, wherein each data set comprises data objects, and wherein the data objects associated with the one or more properties of a subset of the data object types are included in at least one of the data sets.

14. A system comprising:
one or more computer-readable storage mediums having program instructions embodied therewith; and
one or more processors configured to execute the program instructions to cause the system to perform the computer-implemented method of any of Claims 1-13.

15. A computer program product comprising one or more computer-readable storage mediums having program instructions embodied therewith, the program instructions executable by one or more processors to cause the one or more processors to perform the computer-implemented method of any of Claims 1-13.
